(19) Europäisches Patentamt
European Patent Office
Office européen des brevets

(11) **EP 3 648 026 B1**

(12) **FASCICULE DE BREVET EUROPEEN**

(45) Date de publication et mention de la délivrance du brevet:
**23.08.2023 Bulletin 2023/34**

(21) Numéro de dépôt: **19203987.3**

(22) Date de dépôt: **18.10.2019**

(51) Classification Internationale des Brevets (IPC):
***G06Q 10/08*** *(2023.01)*

(52) Classification Coopérative des Brevets (CPC):
**G06Q 10/08**

(54) **PROCÉDÉ DE PILOTAGE EN MODE FLUX D'UN SYSTÈME DE STOCKAGE TAMPON ET DE SÉQUENCEMENT DE CHARGES, ET UNITÉ DE PILOTAGE CORRESPONDANTE**

STEUERUNGSVERFAHREN EINES PUFFER- UND SEQUENZIERSYSTEMS IM DURCHFLUSSMODUS UND ENTSPRECHENDE STEUEREINHEIT

CONTROL METHOD OF BUFFER STORAGE AND LOAD SEQUENCING SYSTEM IN FLOW MODE, AND CORRESPONDING DRIVE UNIT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.10.2018 FR 1860028**

(43) Date de publication de la demande:
**06.05.2020 Bulletin 2020/19**

(73) Titulaire: **Savoye**
**21000 Dijon (FR)**

(72) Inventeurs:
• **PIETROWICZ, Stéphane**
**21220 Fixin (FR)**
• **COLLIN, Jean-Michel**
**21190 Merceuil (FR)**
• **VACHER, Blandine**
**03340 NEUILLY-LE-RE AL (FR)**

(74) Mandataire: **Vidon Brevets & Stratégie**
**16B, rue de Jouanet**
**BP 90333**
**35703 Rennes Cedex 7 (FR)**

(56) Documents cités:
**FR-A1- 3 051 948**

• **Robert Sedgewick: "Priority Queues", , 29 décembre 2017 (2017-12-29), XP055601331, Extrait de l'Internet: URL:https://algs4.cs.princeton.edu/24pq/ [extrait le 2019-07-02]**

**Description**

**1. DOMAINE TECHNIQUE**

Le domaine de l'invention est celui de la logistique et des systèmes de stockage tampon et de séquencement de charges configurés pour recevoir des charges non séquencées provenant d'au moins une unité externe (par exemple un magasin automatisé de stockage/déstockage) et fournir au moins une séquence de charges dans un ordre voulu à au moins un poste de préparation.

La présente invention concerne plus précisément le pilotage d'un système de stockage tampon et de séquencement de charges, dans le cas où celui-ci comprend :

- une unité de stockage tampon comprenant une pluralité de niveaux d'entrée et au moins un niveau de recirculation superposés verticalement, ayant chacun une entrée unique et une sortie unique, et comprenant chacun un convoyeur de type « premier entré premier sorti » selon un premier sens pour les niveaux d'entrée et selon un deuxième sens opposé au premier sens pour le au moins un niveau de recirculation, une charge présente sur le au moins un niveau de recirculation étant dite charge en recirculation ; et
- un élévateur d'entrée et un élévateur de sortie, de type alternatif et discontinu, positionnés respectivement en regard des entrées et en regard des sorties des niveaux d'entrée et du au moins un niveau de recirculation.

La présente invention peut s'appliquer à n'importe quel type de poste de préparation, et notamment mais non exclusivement :

- aux postes de préparation de commandes (aussi appelés « postes de picking »), par prélèvements de produits dans des contenants de stockage (aussi appelés « charges sources ») : un opérateur (ou un robot) reçoit une liste de prélèvements (sur papier, sur écran d'un terminal, sous forme vocale, sous forme de mission informatique (dans le cas du robot), etc.) lui indiquant, pour chaque colis à expédier (aussi appelé « contenant d'expédition » ou « charge cible »), la quantité de chaque type de produits qu'il doit collecter dans des contenants de stockage et regrouper dans le colis à expédier ; et
- aux postes de palettisation de contenants de stockage (aussi appelés « charges sources ») contenant eux-mêmes des produits : un opérateur (ou un robot) reçoit une liste de prélèvements (sur papier, sur écran d'un terminal, sous forme vocale, sous forme de mission informatique (dans le cas du robot), etc.) lui indiquant, pour chaque palette à expédier (aussi appelée « contenant d'expédition » ou « charge cible »), la quantité de chaque type de contenants de stockage (par exemple des cartons) qu'il doit collecter et décharger sur la palette à expédier.

**2. ARRIÈRE-PLAN TECHNOLOGIQUE**

La demande de brevet FR3051948A1, déposée par le titulaire de la présente demande (société SAVOYE), décrit plusieurs implémentations possibles d'un système de stockage tampon et de séquencement de charges du type précité, c'est-à-dire comprenant une unité de stockage tampon, comprenant elle-même N niveaux d'entrée et au moins un niveau de recirculation, ainsi qu'un élévateur d'entrée et un élévateur de sortie.

Le principe général d'un tel système consiste à effectuer les fonctions de stockage tampon et de séquencement de charges en utilisant deux élévateurs alternatifs (d'entrée et de sortie respectivement) en combinaison avec une unité de stockage tampon, sous le contrôle d'une unité de pilotage configurée pour organiser divers mouvements de charges entre ces entités. L'unité de pilotage UP veille notamment au respect d'une règle selon laquelle des charges présentes sur un même niveau d'entrée sont séquencées dans un ordre croissant de numéros d'ordre.

La capacité de séquencement (ordonnancement) du système est liée à la quantité de charges pouvant être stockées temporairement dans l'unité de stockage tampon. En permettant une recirculation (c'est-à-dire un retour vers l'élévateur alternatif d'entrée, et donc potentiellement vers l'entrée de l'unité de stockage tampon) de certaines charges qui sortent de l'unité de stockage tampon, le (au moins un) niveau de recirculation permet d'éviter une situation de blocage de l'unité de stockage tampon, sans en augmenter le nombre de niveaux d'entrée.

Par « unité externe » (qui fournit les charges non séquencées), on entend par exemple (liste non exhaustive) : un système automatique (par exemple un magasin automatisé de stockage/déstockage) ; un système semi-automatique ; un système manuel ; un autre système de stockage tampon et de séquencement de charges ; une combinaison d'au moins deux des systèmes précédents ; etc.

Un tel système présente de nombreux avantages, notamment mais non exclusivement :

- minimisation (voire dans certains cas suppression totale) des contraintes de séquencement en sortie de la (ou les) unité(s) externe(s) par un séquencement des charges en aval de celle(s)-ci, et au plus proche du (ou des) poste(s) de préparation ; cette minimisation (ou suppression) des contraintes permettant de réduire la taille et la complexité, et donc le coût, de la (ou les) unité(s) externe(s) ;
- réduction de l'emprise au sol ;
- optimisation du rendement du système global (comprenant notamment la (ou les) unité(s) externe(s), le système de stockage tampon et de séquencement et le(s) poste(s) de préparation) ;

- optimisation de la réactivité du système global ;
- manipulation de charges multi-formats si des rouleaux motorisés sont utilisés ;
- optimisation des coûts si le système global comprend plusieurs postes de préparation (mutualisation du système de stockage tampon et de séquencement) ;
- etc.

En sortie du système de stockage tampon et de séquencement, plusieurs types de séquences de charges sont réalisables, et notamment mais non exclusivement :

- une séquence comprenant uniquement des charges sources, chaque charge source étant un contenant de stockage de produit(s) ; ou
- une séquence comprenant uniquement des charges cibles, chaque charge cible étant un contenant d'expédition de produit(s) ; ou
- une séquence comprenant une charge cible, qui est un contenant d'expédition de produit(s), suivie d'au moins une charge source, qui est un contenant de stockage de produit(s).

Plusieurs systèmes de stockage tampon et de séquencement (réalisés chacun selon la solution proposée) peuvent être utilisés en parallèle. Par exemple, en amont d'au moins un poste de préparation, un premier système est utilisé uniquement pour des charges sources, et en parallèle un second système est utilisé uniquement pour des charges cibles.

Il est apparu souhaitable aux inventeurs de la présente demande d'optimiser le pilotage d'un système de stockage tampon et de séquencement de charges tel que décrit dans la demande de brevet FR3051948A1.

Ils ont identifié plusieurs axes d'optimisation relatifs en particulier au pilotage de l'élévateur d'entrée, avec notamment une recherche de solution aux problématiques suivantes, tout en gérant un compromis entre d'une part une augmentation du débit des charges séquencées sortant sur le convoyeur de sortie et d'autre part une réduction des risques de blocage du système :

- sélection d'une charge : comment choisir entre les charges qui arrivent à l'élévateur d'entrée via le convoyeur d'entrée et les charges en recirculation qui arrivent à l'élévateur d'entrée via le niveau de recirculation ?
- sélection d'un niveau de destination : une fois qu'une charge a été choisie, comment choisir parmi les niveaux d'entrée le niveau de destination sur lequel la charge doit être transférée par l'élévateur d'entrée, tout en veillant au respect de la règle précitée selon laquelle des charges présentes sur un même niveau d'entrée sont séquencées dans un ordre croissant de numéros d'ordre ?

- sélection d'un niveau à recirculer : dans le cas où il n'est pas possible de choisir un niveau de destination tout en veillant au respect de la règle précitée, comment choisir parmi les niveaux d'entrée un niveau à recirculer (c'est-à-dire un niveau dont les charges qu'il héberge vont devoir être transférées par l'élévateur de sortie vers le niveau de recirculation) ?

L'invention, dans au moins un mode de réalisation, a notamment pour objectif de fournir un procédé de pilotage d'un système de stockage tampon et de séquencement de charges, offrant une solution aux problématiques mentionnées ci-dessus (ou à moins une d'entre elles), tout en gérant le compromis précité (entre augmentation du débit de sortie des charges séquencées et réduction des risques de blocage du système).

## 3. RÉSUMÉ

Dans un mode de réalisation particulier de l'invention, il est proposé un procédé de pilotage d'un système de stockage tampon et de séquencement de charges, configuré pour recevoir des charges non séquencées provenant d'au moins une unité externe, via au moins un convoyeur d'entrée, et fournir au moins une séquence de charges dans un ordre voulu à au moins un poste de préparation, via au moins un convoyeur de sortie, le système comprenant :

- une unité de stockage tampon comprenant N niveaux d'entrée et au moins un niveau de recirculation superposés verticalement, ayant chacun une entrée unique et une sortie unique, et comprenant chacun un convoyeur de type « premier entré premier sorti » selon un premier sens pour les niveaux d'entrée et selon un deuxième sens opposé au premier sens pour le au moins un niveau de recirculation, avec $N \geq 2$, une charge présente sur le au moins un niveau de recirculation étant dite charge en recirculation ; et
- un élévateur d'entrée et un élévateur de sortie, de type alternatif et discontinu, positionnés respectivement en regard des entrées et en regard des sorties des N niveaux d'entrée et du au moins un niveau de recirculation ;

caractérisé en ce qu'une unité de pilotage effectue un pilotage itératif de l'élévateur d'entrée comprenant à chaque itération les étapes suivantes :

- si l'élévateur d'entrée est affecté d'un statut d'attente recirculation, signifiant qu'il existe au moins une charge à recirculer dans le système, mise en attente de l'élévateur d'entrée jusqu'à ce que ladite au moins une charge à recirculer ait été transférée sur l'entrée du au moins un niveau de recirculation ;
- si l'élévateur d'entrée n'est pas affecté dudit statut d'attente recirculation :

* détection d'une première charge sur une sortie du convoyeur d'entrée et d'une deuxième charge sur la sortie du au moins un niveau de recirculation ;

* sélection d'une charge avec les règles suivantes : sélection de la première charge si pas de deuxième charge présente, ou inversement ; si les première et deuxième charges sont présentes, sélection soit systématiquement de la deuxième charge, soit de celle ayant le plus petit numéro d'ordre ;

* sélection d'un niveau de destination parmi les niveaux d'entrée, en respectant une règle selon laquelle des charges présentes sur un même niveau d'entrée, hormis d'éventuelle(s) charge(s) à recirculer, sont séquencées dans un ordre croissant de numéros d'ordre ;

* si la sélection d'un niveau de destination aboutit, génération pour l'élévateur d'entrée d'une mission de transfert de la charge sélectionnée sur l'entrée du niveau de destination sélectionné, sinon :

- affectation à l'élévateur d'entrée dudit statut d'attente recirculation ; et
- sélection d'un niveau à recirculer parmi les niveaux d'entrée, sans génération pour l'élévateur d'entrée d'une mission de transfert de la charge sélectionnée sur l'entrée du niveau à recirculer sélectionné, et affectation à chaque charge du niveau à recirculer d'un statut de charge à recirculer signifiant que ladite charge doit être transférée par l'élévateur de sortie sur l'entrée du au moins un niveau de recirculation.

Le principe général de la solution proposée consiste à effectuer un pilotage itératif de l'élévateur d'entrée dans lequel, afin de favoriser l'augmentation du débit de sortie des charges séquencées par rapport à la réduction des risques de blocage (dans la gestion du compromis précité) :

• on ne cherche pas à générer une mission de transfert pour l'élévateur d'entrée tant qu'il existe au moins une charge à recirculer dans le système ; et
• dans la sélection de charge en entrée de l'élévateur d'entrée, si deux charges se présentent en même temps, l'une sur le convoyeur d'entrée et l'autre sur le niveau de recirculation, deux implémentations sont proposées (dans la première on choisit toujours la charge en attente de recirculation ; dans la deuxième, on choisit celle des deux qui a le plus petit numéro d'ordre).

Par ailleurs, la sélection d'un niveau à recirculer (dans une itération donnée du pilotage itératif) est associée à l'affectation du statut « charge à recirculer » à chaque charge du niveau à recirculer, mais n'implique pas la génération pour l'élévateur d'entrée d'une mission de transfert de la charge sélectionnée sur l'entrée du niveau à recirculer sélectionné. Ainsi, on utilise l'itération suivante du pilotage itératif pour générer une telle mission de transfert, ce qui permet d'optimiser le choix du niveau d'entrée sur lequel la prochaine charge sélectionnée va être placée.

On décrit par la suite, en relation avec les figures, diverses caractéristiques du processus de sélection de niveau de destination et du processus de sélection d'un niveau à recirculer, permettant d'augmenter encore le débit de sortie des charges séquencées.

Diverses implémentations et caractéristiques du procédé de pilotage proposé sont précisées dans le jeu de revendications. Elles sont également détaillées (avec leurs avantages associés) et illustrées à travers des exemples dans la suite de la description.

Dans un autre mode de réalisation de l'invention, il est proposé un produit programme d'ordinateur qui comprend des instructions de code de programme pour la mise en oeuvre du procédé précité (dans l'un quelconque de ses différents modes de réalisation), lorsque ledit programme est exécuté sur un ordinateur.

Dans un autre mode de réalisation de l'invention, il est proposé un médium de stockage lisible par ordinateur et non transitoire, stockant un programme d'ordinateur comprenant un jeu d'instructions exécutables par un ordinateur pour mettre en oeuvre le procédé précité (dans l'un quelconque de ses différents modes de réalisation).

Dans un autre mode de réalisation de l'invention, il est proposé une unité de pilotage d'un système de stockage tampon et de séquencement de charges, configuré pour recevoir des charges non séquencées provenant d'au moins une unité externe, via au moins un convoyeur d'entrée, et fournir au moins une séquence de charges dans un ordre voulu à au moins un poste de préparation, via au moins un convoyeur de sortie, le système comprenant :

- une unité de stockage tampon comprenant N niveaux d'entrée et au moins un niveau de recirculation superposés verticalement, ayant chacun une entrée unique et une sortie unique, et comprenant chacun un convoyeur de type « premier entré premier sorti » selon un premier sens pour les niveaux d'entrée et selon un deuxième sens opposé au premier sens pour le au moins un niveau de recirculation, avec N≥2, une charge présente sur le au moins un niveau de recirculation étant dite charge en recirculation ; et
- un élévateur d'entrée et un élévateur de sortie, de type alternatif et discontinu, positionnés respectivement en regard des entrées et en regard des sorties des N niveaux d'entrée et du au moins un niveau de recirculation.

Ladite unité de pilotage est configurée pour effectuer un pilotage itératif de l'élévateur d'entrée (selon l'un quelconque de ses modes de réalisation décrits plus bas).

## 4. LISTE DES FIGURES

D'autres caractéristiques et avantages de l'invention apparaîtront à la lecture de la description suivante, donnée à titre d'exemple indicatif et non limitatif, et des dessins annexés, dans lesquels :

- la figure 1 est une vue de côté d'un système de stockage tampon et de séquencement de charges selon un mode de réalisation particulier de l'invention ;
- la figure 2 présente un organigramme du pilotage de l'élévateur d'entrée, selon un mode de réalisation particulier de l'invention ;
- la figure 3 présente un organigramme du pilotage de l'élévateur de sortie, selon un mode de réalisation particulier de l'invention ; et
- la figure 4 présente un schéma-bloc d'une unité de pilotage selon un mode de réalisation particulier de l'invention.

## 5. DESCRIPTION DÉTAILLÉE

Sur toutes les figures du présent document, les éléments et étapes identiques sont désignés par une même référence numérique.

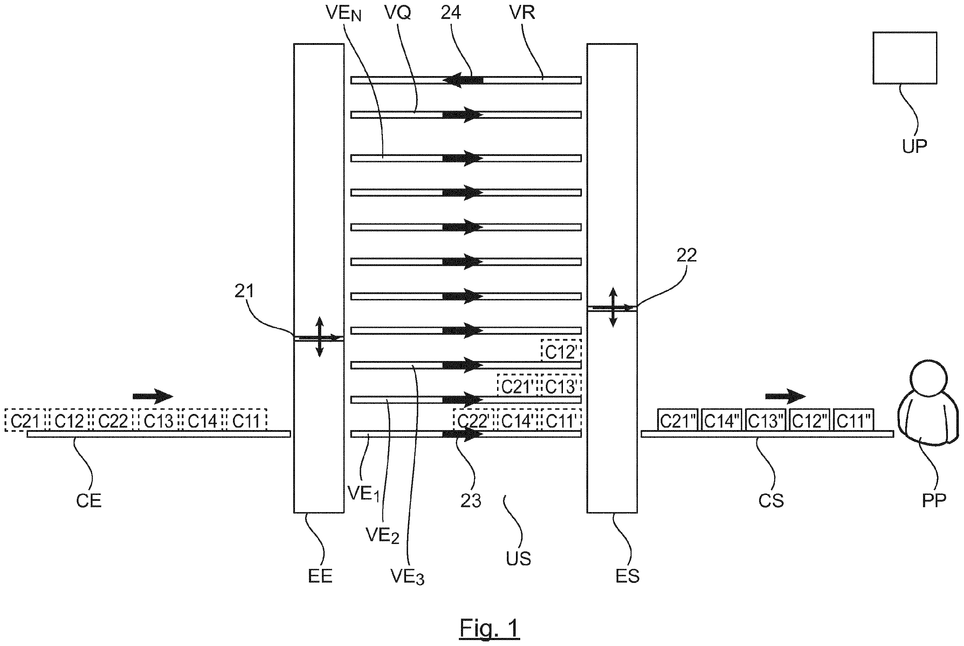

La **figure 1** illustre un système de stockage tampon et de séquencement de charges selon un mode de réalisation particulier de l'invention. Il est configuré pour recevoir des charges non séquencées provenant d'une unité externe (non représentée), via un convoyeur d'entrée CE, et fournir au moins une séquence de charges dans un ordre voulu (charges séquencées) à un poste de préparation PP (occupé par un opérateur ou un robot), via un convoyeur de sortie CS.

En d'autres termes, le système (ou « buffer-séquenceur ») trie des charges en fonction d'une liste d'attendus en sortie et des charges qu'il découvre en entrée.

La liste des attendus en sortie est fournie à l'unité de pilotage UP. Elle comprend des couples associant un numéro d'ordre et un identifiant de charge. La liste des attendus en sortie fournit donc une liste de numéros d'ordre, qui est obligatoirement croissante non stricte (mais non nécessairement continue). Exemples de liste de numéros d'ordre :

- exemple 1 : 1, 2, 3, 4, 5, 6, 7, 8 ;
- exemple 2 : 1, 1, 2, 3, 4, 4, 4, 4, 5, 6, 7, 8, 8, 9, 9, 10 ;
- exemple 3 : 1, 1, 2, 3, 6, 7, 8, 8, 10.

Le prochain numéro de la liste des attendus en sortie est le premier de la liste, ayant donc la valeur la plus faible.

Quand une charge a été traitée (déposée sur le convoyeur de sortie), son numéro d'ordre est enlevé de la liste. Actualisation des exemples précédents de liste de numéros d'ordre, en supposant qu'une charge ayant le numéro d'ordre 1 a été déposée sur le convoyeur de sortie :

- exemple 1 : 2, 3, 4, 5, 6, 7, 8 ;
- exemple 2 : 1, 2, 3, 4, 4, 4, 4, 5, 6, 7, 8, 8, 9, 9, 10 ;
- exemple 3 : 1, 2, 3, 6, 7, 8, 8, 10.

L'unité externe est par exemple un magasin automatisé de stockage/déstockage. Dans une variante, l'unité externe est un autre système de stockage tampon et de séquencement de charges. Dans une autre variante, le système de stockage tampon et de séquencement de charges reçoit des charges non séquencées provenant de plusieurs unités externes (soit via plusieurs convoyeurs d'entrée CE spécifiques chacun à une des unités externes, soit via un convoyeur d'entrée CE utilisé conjointement par plusieurs unités externes).

Le système de stockage tampon et de séquencement de charges comprend un élévateur d'entrée EE, un élévateur de sortie ES, une unité de stockage tampon US et une unité de pilotage UP.

Les élévateurs d'entrée EE et de sortie ES sont des élévateurs verticaux de type alternatif et discontinu, comprenant chacun une unique nacelle 21, 22 effectuant des mouvements verticaux alternatifs (la nacelle monte et descend alternativement). Par opposition, un « élévateur continu » (aussi appelé « patemoster ») est un élévateur vertical comprenant une pluralité de nacelles circulant en boucle fermée, sans mouvement alternatif. L'unique nacelle 21, 22 est mono-charge (elle comporte un unique niveau comprenant un unique emplacement configuré pour recevoir une charge). Ainsi les élévateurs EE, ES sont simples et de faible coût.

L'unique emplacement de nacelle est par exemple équipé d'une section de convoyeur motorisé (ou de tout autre dispositif de transfert) permettant de transférer une charge sur ou en dehors de la nacelle. Dans une variante, l'emplacement de nacelle est équipé de rouleaux libres, dont la mise en mouvement est par exemple assurée par un moyen mécanique escamotable positionné en bout d'un autre équipement (convoyeur ou emplacement tampon). D'autres moyens de mise en mouvement peuvent être envisagés.

Dans une autre variante, l'unique nacelle de chaque élévateur EE, ES est multicharge (elle comporte plusieurs niveaux et/ou plusieurs emplacements de charge par niveau).

Dans une autre variante, les élévateurs EE, ES sont des élévateurs verticaux de type alternatif et discontinu, comprenant chacun plusieurs nacelles effectuant chacune des mouvements verticaux alternatifs (la nacelle monte et descend alternativement). Chaque nacelle comprend un ou plusieurs niveaux et/ou un plusieurs emplacements de charge par niveau.

L'unité de stockage tampon US comprend :

- N niveaux d'entrée $VE_1$ à $VE_N$, superposés verticalement, ayant chacun une entrée unique et une sortie unique, et comprenant chacun un convoyeur de type « premier entré premier sorti » (ou FIFO, pour « First In First Out ») selon un premier sens (indiqué sur la figure 1 par des flèches noires orientées de gauche à droite, notamment celle référencée 23), avec $N \geq 2$ (par exemple, N=9 dans une mise en oeuvre particulière). Chaque niveau d'entrée déplace automatiquement les charges de l'amont (côté élévateur d'entrée) vers l'aval (côté élévateur de sortie). Chaque niveau d'entrée comprend un convoyeur d'avance automatique pas à pas, permettant d'avancer automatiquement les charges jusqu'à une position d'attente avant prise par l'élévateur de sortie. Il peut ainsi y avoir Y charges au maximum dans un niveau ;
- un niveau de recirculation VR, superposé verticalement avec les niveaux d'entrée, ayant une entrée unique et une sortie unique, et comprenant un convoyeur de type « premier entré premier sorti » selon un deuxième sens (indiqué sur la figure 1 par une flèche noire orientée de droite à gauche et référencée 24) opposé au premier sens. Chaque charge présente sur le niveau de recirculation VR est dite « charge en recirculation ». Le niveau de recirculation déplace automatiquement les charges de l'aval (côté élévateur de sortie) vers l'amont (côté élévateur d'entrée). Le niveau de recirculation VR est positionnable à n'importe quel étage (dans un mode de réalisation particulier, il est positionné verticalement au centre de la superposition de niveaux d'entrée, afin de limiter les déplacements de l'élévateur de sortie). Dans une variante, l'unité de stockage tampon US comprend plusieurs niveaux de recirculation ;
- (optionnellement) un niveau « voie rapide » VQ, superposé verticalement avec les niveaux d'entrée $VE_1$ à $VE_N$ et le niveau de recirculation VR, ayant une entrée unique et une sortie unique, et comprenant un convoyeur de type « premier entré premier sorti » selon le premier sens. Le niveau voie rapide est réservé aux charges en retard, pour leur permettre d'être prise au plus vite par l'élévateur de sortie.

L'élévateur d'entrée EE et l'élévateur de sortie ES sont positionnés respectivement en entrée et en sortie des N niveaux d'entrée $VE_1$ à $VE_N$, du niveau de recirculation VR et du niveau « voie rapide » VQ de l'unité de stockage tampon US. La nacelle 21 de l'élévateur d'entrée EE peut venir en regard de l'entrée de chacun des N niveaux d'entrée et du niveau « voie rapide » VQ de l'unité de stockage tampon US pour y insérer une charge. Elle peut également venir en regard de la sortie du niveau de recirculation VR pour en retirer une charge.

La nacelle 22 de l'élévateur de sortie ES peut venir en regard de la sortie de chacun des N niveaux d'entrée et du niveau « voie rapide » VQ de l'unité de stockage tampon US pour en retirer une charge. Elle peut également venir en regard de l'entrée du niveau de recirculation VR pour y insérer une charge.

Le convoyeur d'entrée CE occupe une position permettant un échange direct de charges avec l'élévateur d'entrée EE. En d'autres termes, une charge peut passer directement de l'un à l'autre. Dans l'exemple de la figure 1, l'élévateur d'entrée EE est positionné entre le convoyeur d'entrée CE et l'unité de stockage tampon US, et le convoyeur d'entrée CE est aligné verticalement avec le niveau d'entrée référencé $VE_1$ de l'unité de stockage tampon US. Dans des variantes, le convoyeur d'entrée CE peut occuper d'autres positions verticales, et notamment être aligné verticalement avec l'un quelconque des N niveaux d'entrée $VE_1$ à $VE_N$ de l'unité de stockage tampon US, ou encore avec le niveau « voie rapide » VQ ou le niveau de recirculation VR. Dans d'autres variantes, le convoyeur d'entrée CE et l'unité de stockage tampon US sont positionnés du même côté de l'élévateur d'entrée EE (dans ce cas, le convoyeur d'entrée CE est positionné au-dessus ou au-dessous de l'unité de stockage tampon US). Dans d'autres variantes, on peut avoir plusieurs convoyeurs d'entrée CE, en accord avec toutes les variantes précédentes.

Le convoyeur de sortie CS occupe une position permettant un échange direct de charges avec l'élévateur de sortie ES. En d'autres termes, une charge peut passer directement de l'un à l'autre. Dans l'exemple de la figure 1, l'élévateur de sortie ES est positionné entre l'unité de stockage tampon US et le convoyeur de sortie CS, et le convoyeur de sortie CS est aligné verticalement avec le niveau d'entrée référencé $VE_1$ de l'unité de stockage tampon US. Dans des variantes, le convoyeur de sortie CS peut occuper d'autres positions verticales, et notamment être aligné verticalement avec l'un quelconque des N niveaux d'entrée $VE_1$ à $VE_N$ de l'unité de stockage tampon US, ou encore avec le niveau « voie rapide » VQ ou le niveau de recirculation VR. Dans d'autres variantes, le convoyeur de sortie CS et l'unité de stockage tampon US sont positionnés du même côté de l'élévateur de sortie ES (dans ce cas, le convoyeur de sortie CS est positionné au-dessus ou au-dessous de l'unité de stockage tampon US). Dans d'autres variantes on peut avoir plusieurs convoyeurs de sortie CS, en accord avec toutes les variantes précédentes.

L'unité de pilotage UP permet d'organiser de façon optimale les mouvements des charges dans le système, et notamment sur les élévateurs d'entrée EE et de sortie ES et l'unité de stockage tampon US, afin de mettre à disposition sur le convoyeur de sortie CS des charges sources selon au moins une séquence déterminée (comportant des charges dans un ordre voulu). A cet effet, l'unité de pilotage UP reçoit des informations (notamment un identifiant de charge) lues, sur les charges passant à différents endroits du système, par des dispositifs de lecture (non représentés), de type lecteur code à barre, lecteur d'étiquette RFID, etc. Ces endroits sont par exemple situés aux extrémités des différents convoyeurs.

Plus précisément, l'unité de pilotage UP organise, sous la contrainte précitée de délivrance d'au moins une séquence déterminée, différents mouvements de charges :

- depuis le convoyeur d'entrée CE vers l'élévateur d'entrée EE ;
- depuis l'élévateur d'entrée EE vers les N niveaux d'entrée de l'unité de stockage tampon US ;
- depuis l'élévateur d'entrée EE vers le niveau « voie rapide » VQ de l'unité de stockage tampon US ;
- depuis les N niveaux d'entrée de l'unité de stockage tampon US vers l'élévateur de sortie ES ;
- depuis le niveau « voie rapide » VQ de l'unité de stockage tampon US vers l'élévateur de sortie ES ;
- depuis l'élévateur de sortie ES vers le convoyeur de sortie CS ;
- depuis l'élévateur de sortie ES vers le niveau de recirculation VR ; et
- depuis le niveau de recirculation VR vers l'élévateur d'entrée EE.

L'élévateur d'entrée EE et l'élévateur de sortie ES fonctionnent simultanément, ce qui permet d'augmenter la cadence du système de stockage tampon et de séquencement.

Pour que le système fournisse une séquence de charges dans un ordre voulu, l'unité de pilotage UP effectue :

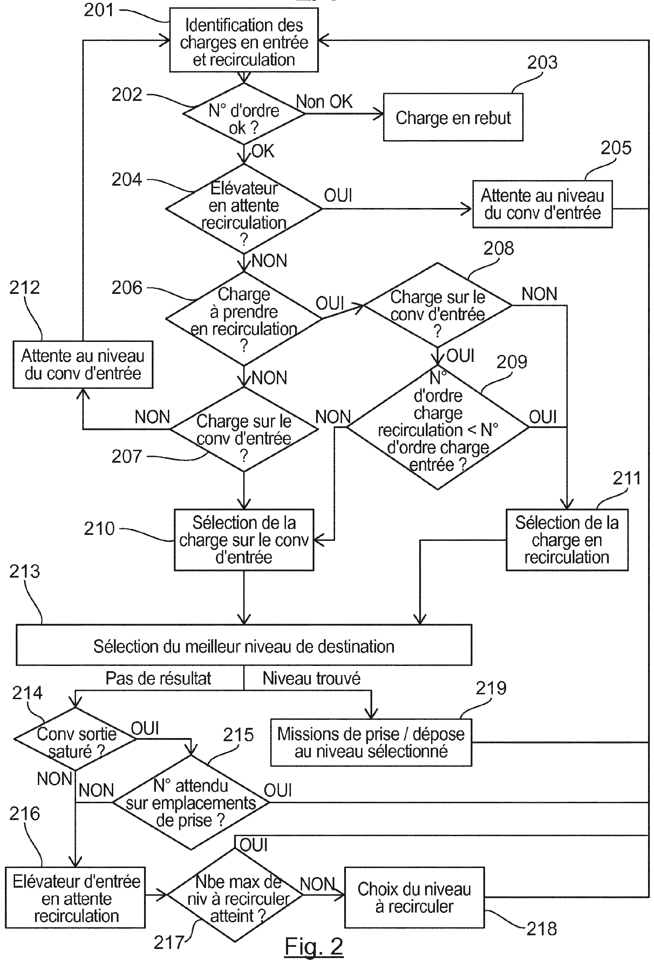

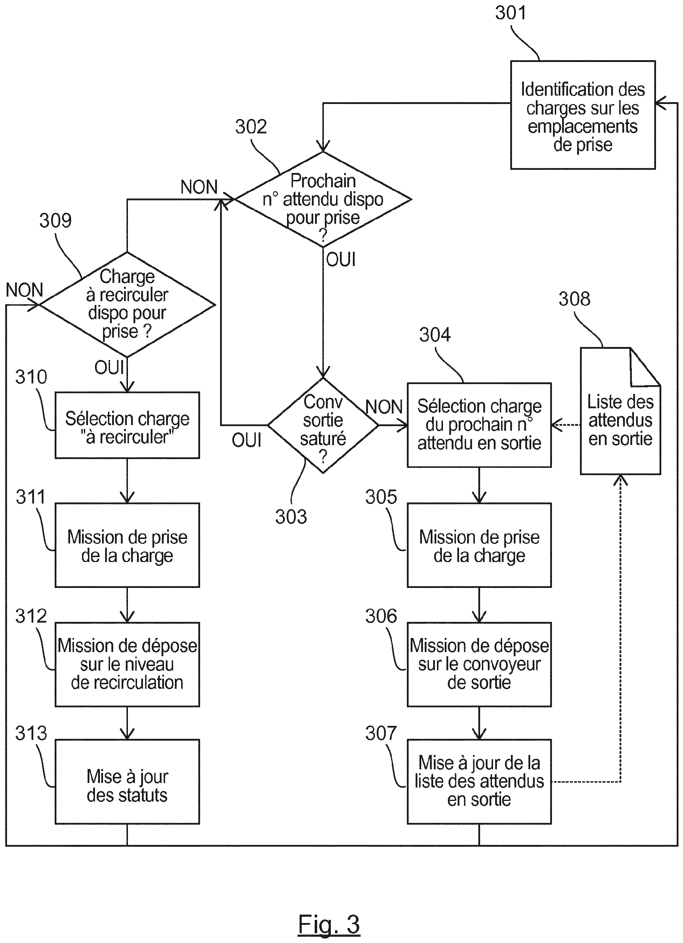

- un pilotage itératif de l'élévateur d'entrée (voir figure 2), de sorte que celui-ci effectue un pré-séquencement quand il place les charges de la séquence en entrée des niveaux d'entrée $VE_1$ à $VE_N$ et du niveau « voie rapide » VQ de l'unité de stockage tampon US. Pour cela, l'unité de pilotage UP veille notamment au respect d'une règle selon laquelle des charges présentes sur un même niveau d'entrée (hormis d'éventuelle(s) charge(s) à recirculer) sont séquencées dans un ordre croissant de numéros d'ordre. En d'autres termes, sur chacun des N niveaux d'entrée, une charge donnée possédant un rang donné au sein de la séquence ne doit être précédée d'aucune charge (hormis d'éventuelle(s) charge(s) à recirculer) de rang strictement supérieur au rang donné (plusieurs charges peuvent avoir le même rang au sein de la séquence) ; et
- un pilotage itératif de l'élévateur de sortie (voir figure 3), de sorte que celui-ci effectue un séquencement final quand il prélève les charges de la séquence en sortie des N niveaux d'entrée $VE_1$ à $VE_N$ et du niveau « voie rapide » VQ de l'unité de stockage tampon US, selon l'ordre voulu.

En d'autres termes, la fonction de séquencement (ordonnancement) est répartie entre l'élévateur d'entrée EE (qui effectue le pré-séquencement) et l'élévateur de sortie ES (qui effectue le séquencement final). Ceci permet au système de stockage tampon et de séquencement de charges de fonctionner à une cadence élevée (directement liée à la cadence de travail des élévateurs d'entrée et de sortie).

Ainsi, dans l'exemple illustré sur la figure 1, on considère que la séquence à reconstituer sur le convoyeur de sortie CS comprend dans l'ordre les charges suivantes : C11, C12, C13, C14 et C21. L'élévateur d'entrée EE reçoit les charges dans le désordre (C11, C14, C13, C22, C12 et C21). Il effectue un pré-séquencement en effectuant les actions successives suivantes :

- placement de la charge C11 sur le niveau d'entrée $VE_1$ ;
- placement de la charge C14 sur le niveau d'entrée $VE_1$ ;
- placement de la charge C13 sur le niveau d'entrée $VE_2$ (pas possible de la placer sur le niveau d'entrée $VE_1$ car la charge C14 s'y trouve déjà) ;
- placement de la charge C22 sur le niveau d'entrée $VE_1$ ;
- placement de la charge C12 sur le niveau d'entrée $VE_3$ (pas possible de la placer sur le niveau d'entrée $VE_1$ car les charges C14 et C22 s'y trouvent déjà, ni sur le niveau d'entrée $VE_2$ car la charge C13 s'y trouve déjà) ;
- placement de la charge C21 sur le niveau d'entrée $VE_2$ (pas possible de la placer sur le niveau d'entrée $VE_1$ car la charge C22 s'y trouve déjà).

Sur la figure 1, des charges sont référencées avec des caractères alphanumériques (« C11 », « C12 », « C13 », etc.) pour illustrer le fonctionnement du système. Afin de faire apparaître sur la même figure des positions successives d'une même charge, la notation suivante est utilisée : pour une première position, la charge est référencée seulement avec ses caractères alphanumériques associés (par exemple « C11 »), pour une deuxième position, la référence de la charge est complétée avec le symbole prime (par exemple « C11' »), pour une troisième position, la référence de la charge est référencée avec le symbole double prime (par exemple « C11" »), etc.

En cas d'impossibilité pour l'élévateur d'entrée EE de déposer une charge sur un niveau d'entrée, l'unité de pilotage UP recherche et sélectionne un niveau à recirculer parmi les niveaux d'entrée. Le niveau d'entrée sélectionné a alors le statut « à recirculer », et les charges sur ce niveau ont le statut « à recirculer ». Une charge « à recirculer » passe au statut « en recirculation » lorsqu'elle est déposée sur le niveau de recirculation VR par l'élévateur de sortie ES. Le nombre maximal de niveau(x) d'entrée pouvant avoir le statut « à recirculer » en simultané est prédéfini. Dans un mode de réalisation particulier, ce nombre est égal à 1, afin de favoriser l'augmentation du débit de sortie des charges séquencées.

Dans un mode de réalisation particulier, une voie de rebut est implantée, soit en entrée, soit en sortie de l'unité de stockage tampon US, pour traiter les anomalies, aussi appelées « charges en rebut » : charge non attendue, charge non lue, etc. Les charges en rebut sont donc soit directement sorties par l'élévateur d'entrée, soit convoyées sur un niveau d'entrée pour être évacuée par l'élévateur de sortie. Une charge en rebut ne peut pas prendre le statut « à recirculer ».

La **figure 2** présente un organigramme du pilotage de l'élévateur d'entrée par l'unité de pilotage UP, selon un mode de réalisation particulier de l'invention. C'est un pilotage itératif comprenant à chaque itération les étapes détaillées ci-après.

Hormis pour les saturations de niveaux, les charges ayant le statut « rebut » ne sont pas prises en compte. Par exemple, si une charge « rebut » est la charge la plus en amont d'un niveau (c'est-à-dire la plus proche de l'élévateur d'entrée), c'est le numéro d'ordre de la charge qui la précède (immédiatement en aval) qui sera pris en compte pour définir NumDerCharge.

Dans une étape initiale 201, l'unité de pilotage détecte et identifie les charges éventuellement présentes sur les positions de prise par l'élévateur d'entrée : position de prise sur la sortie du convoyeur d'entrée CE et position de prise sur la sortie du niveau de recirculation VR.

Dans une étape de test 202, l'unité de pilotage récupère le numéro d'ordre des charges détectées et identifiées dans l'étape 201, et vérifie qu'ils sont bien présents dans la liste d'attendus en sortie. Si le numéro d'ordre d'une charge détectée n'est pas dans la liste d'attendus en sortie, la charge est mise en rebut dans une étape 203. Sinon passage à l'étape de test 204, dans laquelle l'unité de pilotage détecte si l'élévateur d'entrée est affecté d'un statut d'attente recirculation, signifiant qu'il existe au moins une charge à recirculer dans le système.

En cas de réponse positive à l'étape de test 204, l'unité de pilotage passe à l'étape 205 dans laquelle l'élévateur d'entrée est mis en attente (par exemple devant la sortie du convoyeur d'entrée) jusqu'à ce que la ou les charge(s) à recirculer ai(en)t été transférée(s) sur l'entrée du niveau de recirculation, puis revient à l'étape initiale 201.

En cas de réponse négative à l'étape de test 204 (c'est-à-dire si l'élévateur d'entrée n'est pas affecté du statut d'attente recirculation), l'unité de pilotage passe à l'étape de test 206 (charge présente sur la sortie du niveau de recirculation ?), combinée à l'une des étapes de test identiques 207 et 208 (charge présente sur la sortie du convoyeur d'entrée ?), pour déterminer dans quel cas on se trouve parmi quatre cas possible :

- cas 1 : pas de charge présente sur la sortie du convoyeur d'entrée ni sur la sortie du niveau de recirculation (réponses négatives aux tests 206 et 207) ;
- cas 2 : charge présente sur la sortie du convoyeur d'entrée et pas de charge présente sur la sortie du niveau de recirculation (réponse positive au test 207 et négative au test 206) ;
- cas 3 : pas de charge présente sur la sortie du convoyeur d'entrée et charge présente sur la sortie du niveau de recirculation (réponse négative au test 208 et positive au test 206) ;
- cas 4 : charge présente sur la sortie du convoyeur d'entrée et charge présente sur la sortie du niveau de recirculation (réponses positives aux tests 206 et 208).

Dans le cas 1, l'unité de pilotage passe à l'étape 212 (identique à l'étape 205) dans laquelle l'élévateur d'entrée est mis en attente (par exemple devant la sortie du convoyeur d'entrée), puis revient à l'étape initiale 201.

Dans le cas 2, l'unité de pilotage passe à l'étape 210, dans laquelle la charge présente sur la sortie du convoyeur d'entrée est sélectionnée, puis à l'étape 213 de sélection d'un niveau de destination parmi les niveaux d'entrée.

Dans le cas 3, l'unité de pilotage passe à l'étape 211 dans laquelle la charge présente sur la sortie du niveau de recirculation est sélectionnée, puis à l'étape 213 de sélection d'un niveau de destination parmi les niveaux d'entrée.

Dans le cas 4 :

- première implémentation : l'unité de pilotage passe directement à l'étape 211 dans laquelle la charge présente sur la sortie du niveau de recirculation est sélectionnée (pas d'étape 209) ;
- deuxième implémentation : l'unité de pilotage passe à l'étape de test 209 dans laquelle elle détecte si le numéro d'ordre de la charge présente sur la sortie du niveau de recirculation est inférieur au numéro d'ordre de la charge présente sur la sortie du convoyeur d'entrée. En cas de réponse positive à l'étape de test 209, l'unité de pilotage passe à l'étape 211 (dans laquelle la charge présente sur la sortie du niveau de recirculation est sélectionnée) puis à l'étape 213 (de sélection d'un niveau de destination parmi les niveaux d'entrée). Sinon (réponse négative à l'étape de test 209), elle passe à l'étape 210 (dans laquelle la charge présente sur la sortie du convoyeur d'entrée est sélectionnée) puis à l'étape 213 (de sélection d'un niveau de destination parmi les niveaux d'entrée). En résumé, dans le cas 4, la charge sélectionnée est celle ayant le plus petit numéro d'ordre.

Dans l'étape 213, l'unité de pilotage cherche à sélectionner un niveau de destination parmi les niveaux d'entrée, en respectant la règle précitée selon laquelle des charges présentes sur un même niveau d'entrée (hormis d'éventuelle(s) charge(s) à recirculer) sont séquencées dans un ordre croissant de numéros d'ordre.

Si le niveau « voie rapide » VQ est implémenté, l'unité de pilotage le sélectionne directement si une des conditions suivantes est respectée :

- le numéro d'ordre de la charge sélectionnée est celui du prochain numéro d'ordre de la liste d'attendus en sortie ;
- le numéro d'ordre de la charge sélectionnée est celui directement attendu après le numéro d'ordre de la dernière charge placée dans le niveau « voie rapide » (c'est-à-dire celle la plus près de l'élévateur d'entrée).

Dans un mode de réalisation particulier, l'étape 213 de sélection d'un niveau de destination comprend en outre l'attribution d'une note à chacun des niveaux d'entrée (avec un jeu de règles de notation détaillé ci-après) puis la sélection du niveau d'entrée ayant obtenu la note (positive) la plus élevée.

En cas d'égalité entre plusieurs niveaux d'entrée ayant la même note, l'unité de pilotage privilégie par exemple le premier niveau d'entrée en suivant un ordre de parcours des niveaux d'entrée, défini dans un paramétrage qui dépend de la configuration physique du système.

Dans une implémentation particulière, le jeu de règles de notation comprend, pour affecter une note à un niveau d'entrée donné :

- initialisation de la note à zéro ;
- si le niveau d'entrée donné est saturé, décrémentation de la note d'une valeur C0 ;
- si le niveau d'entrée donné est vide, incrémentation de la note d'une valeur C1 ;
- si le numéro d'ordre de la dernière charge entrée sur le niveau d'entrée donné est inférieur ou égal au numéro d'ordre de la charge sélectionnée, incrémentation de la note d'une valeur C2 ;

avec : C1 < C2 < C0.

Dans une implémentation particulière, on a :

$$C2 = C3 - (NumCharge - NumDerCharge),$$

avec NumDerCharge le numéro d'ordre de la dernière charge placée sur le niveau d'entrée donné et NumCharge le numéro d'ordre de la charge sélectionnée, et avec C1 < C3 < C0.

Dans une implémentation particulière, on a : C0 = 10 000 ; C1 = 10 ; C2 = 200 - (NumCharge - NumDerCharge).

Dans une implémentation particulière de l'étape 213, le niveau de destination sélectionné prend le statut d'un niveau à recirculer et la charge sélectionnée (qui à l'étape 219 va être déposée sur le niveau de destination sélectionné) prend le statut d'une charge à recirculer (afin d'être transférée sur l'entrée du au moins un niveau de recirculation par l'élévateur de sortie) si les conditions suivantes sont vérifiées :

- le niveau de destination sélectionné est vide ;
- le numéro d'ordre de la charge sélectionnée est strictement supérieur au numéro d'ordre de la charge en (N.Y)ème place dans la liste d'attendus en sortie, avec Y la capacité de charges de chaque niveau d'entrée ; et
- soit le niveau de recirculation est vide, soit la dernière charge placée sur le niveau de recirculation possède un numéro d'ordre inférieur au numéro d'ordre de la charge sélectionnée.

Si l'étape 213 a abouti (c'est-à-dire si un niveau de destination a pu être sélectionné parmi les niveaux d'entrée), l'unité de pilotage effectue l'étape 219 dans laquelle elle génère pour l'élévateur d'entrée une mission de transfert de la charge sélectionnée sur l'entrée du niveau de destination sélectionné.

Si l'étape 213 n'a pas abouti, l'unité de pilotage effectue des étapes de test 214 et 215. Dans l'étape 214, elle détecte si le au moins un convoyeur de sortie (CS) est saturé. Dans l'étape 215, elle détecte si un emplacement de prise par l'élévateur de sortie est occupé par une charge possédant le prochain numéro d'ordre dans la liste d'attendus en sortie. Si les deux conditions des tests 214 et 215 sont vérifiées, l'unité de pilotage revient à l'étape initiale 201, sinon elle passe à une étape 216 d'affectation à l'élévateur d'entrée du statut d'attente recirculation, puis à une étape de test 217 dans laquelle elle détecte si le nombre maximal prédéterminé de niveau(x) à recirculer est atteint. Comme mentionné plus haut, dans un mode de réalisation particulier ce nombre maximal est égal à 1, afin de favoriser l'augmentation du débit de sortie des charges séquencées.

Si la condition du test 217 est vérifiée, l'unité de pilotage revient à l'étape initiale 201, sinon elle passe à une étape 218 de sélection d'un niveau à recirculer.

Dans l'étape 218, l'unité de pilotage sélectionne un niveau à recirculer parmi les niveaux d'entrée (sans génération pour l'élévateur d'entrée d'une mission de transfert de la charge sélectionnée sur l'entrée du niveau à recirculer sélectionné) et elle affecte à chaque charge du niveau à recirculer (hormis les charges ayant le statut « rebut ») un statut de charge à recirculer (signifiant que la charge doit être transférée par l'élévateur de sortie sur l'entrée du niveau de recirculation).

Dans un mode de réalisation particulier, l'étape 218 de sélection d'un niveau à recirculer comprend :

- pour chacun des niveaux d'entrée, identification du numéro d'ordre de la charge la plus proche de l'élévateur de sortie ; et
- sélection, comme niveau à recirculer, du niveau d'entrée pour lequel le numéro d'ordre identifié est le plus élevé.

La **figure 3** présente un organigramme du pilotage de l'élévateur de sortie par l'unité de pilotage UP, selon un mode de réalisation particulier de l'invention.

C'est un pilotage itératif comprenant à chaque itération les étapes détaillées ci-après.

Dans une étape initiale 301, l'unité de pilotage détecte et identifie les charges éventuellement présentes sur les positions de prise par l'élévateur de sortie : positions de prise sur les sorties des niveaux d'entrée $VE_1$ à $VE_N$ et sur la sortie du niveau « voie rapide » VQ.

Dans une étape de test 302, l'unité de pilotage détecte si une charge ayant le prochain numéro d'ordre de la liste d'attendus en sortie est disponible pour prise, parmi les charges détectées à l'étape 301.

En cas de réponse positive à l'étape de test 302, l'unité de pilotage passe à l'étape de test 303 dans laquelle elle détecte si le convoyeur de sortie est saturé.

En cas de réponse négative à l'étape de test 303, l'unité de pilotage effectue les étapes 304 à 307 :

- dans l'étape 304, l'unité de pilotage sélectionne une charge ayant le prochain numéro d'ordre de la liste d'attendus en sortie 308 (s'il y a plusieurs charges possédant un tel numéro d'ordre, l'unité de pilotage sélectionne par exemple celle qui est la plus proche de la position de l'élévateur de sortie) ;
- dans l'étape 305, l'unité de pilotage génère, pour l'élévateur de sortie, une mission de prise de la charge sélectionnée ;
- dans l'étape 306, l'unité de pilotage génère, pour l'élévateur de sortie, une mission de dépose de la charge sélectionnée sur le convoyeur de sortie CS ;
- dans l'étape 307, l'unité de pilotage met à jour la liste d'attendus en sortie 308.

En cas de réponse négative à l'étape de test 302, ou de réponse positive à l'étape de test 303, l'unité de pilotage effectue une étape de test 309 dans laquelle elle détecte si une charge à recirculer est disponible pour prise, parmi les charges détectées à l'étape 301.

En cas de réponse positive à l'étape de test 309, l'unité de pilotage effectue les étapes 310 à 313 :

- dans l'étape 310, l'unité de pilotage sélectionne une charge à recirculer (s'il y en a plusieurs, l'unité de pilotage sélectionne par exemple celle qui a le numéro d'ordre le plus faible) ;
- dans l'étape 311, l'unité de pilotage génère, pour l'élévateur de sortie, une mission de prise de la charge à recirculer sélectionnée ;
- dans l'étape 312, l'unité de pilotage génère, pour l'élévateur de sortie, une mission de dépose de la charge à recirculer sélectionnée sur le niveau de recirculation VR ;
- dans l'étape 313, l'unité de pilotage met à jour les statuts. Elle enlève le statut « à recirculer » de la charge et lui affecte le statut « en recirculation ». Si suite à ce changement de statut de la charge, le niveau d'entrée sur lequel elle se trouvait n'a plus de charges « à recirculer », l'unité de pilotage enlève le statut « à recirculer » de ce niveau d'entrée et enlève à l'élévateur d'entrée le statut d'attente recirculation.

En cas de réponse positive à l'étape de test 309, l'unité de pilotage revient à l'étape initiale 301.

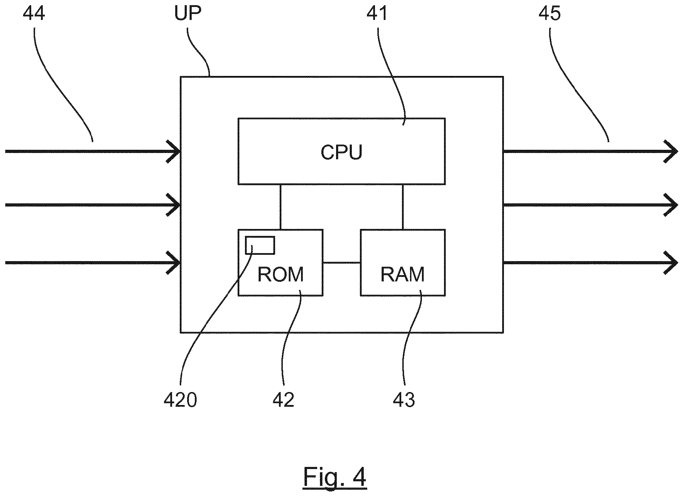

La **figure 4** présente un exemple de structure de l'unité de pilotage UP précitée, selon un mode de réalisation particulier de l'invention. L'unité de pilotage UP comprend une mémoire vive 43 (par exemple une mémoire RAM), une unité de traitement 41, équipée par exemple d'un processeur, et pilotée par un programme d'ordinateur 420 stocké dans une mémoire morte 42 (par exemple une mémoire ROM ou un disque dur). A l'initialisation, les instructions de code du programme d'ordinateur 420 sont par exemple chargées dans la mémoire vive 43 avant d'être exécutées par le processeur de l'unité de traitement 41. L'unité de traitement 41 reçoit des signaux d'entrée 44, les traite et génère des signaux de sortie 45.

Les signaux d'entrée 44 comprennent diverses informations relatives au fonctionnement du système global (comprenant notamment la (ou les) unité(s) externe(s), le système de stockage tampon et de séquencement et le(s) poste(s) de préparation), notamment les identifiants de charge lus (par des dispositifs de lecture de type lecteur code à barre, lecteur d'étiquette RFID, etc.) sur les charges quand elles passent à différents endroits du système global (par exemple aux extrémités des différents convoyeurs).

Les signaux de sortie 45 comprennent diverses informations de contrôle pour le pilotage (contrôle) des équipements du système global (notamment au sein du système de stockage tampon et de séquencement), afin de gérer les mouvements des charges dans le système global.

Cette figure 4 illustre seulement une implémentation particulière parmi plusieurs possibles. En effet, l'unité de pilotage UP se réalise indifféremment sur une machine de calcul reprogrammable (un ordinateur PC, un processeur DSP ou un microcontrôleur) exécutant un programme comprenant une séquence d'instructions, et/ou sur une machine de calcul dédiée (par exemple un ensemble de portes logiques comme un FPGA ou un ASIC, ou tout autre module matériel). Dans le cas où l'unité de pilotage est implantée au moins en partie sur une machine de calcul reprogrammable, le programme correspondant (c'est-à-dire la séquence d'instructions) peut être stocké dans un médium de stockage amovible (tel que par exemple une disquette, un CD-ROM ou un DVD-ROM) ou non, ce médium de stockage étant lisible partiellement ou totalement par un ordinateur ou un processeur.

**Revendications**

1.  Procédé de pilotage d'un système de stockage tampon et de séquencement de charges, configuré pour recevoir des charges non séquencées provenant d'au moins une unité externe, via au moins un convoyeur d'entrée (CE), et fournir au moins une séquence de charges dans un ordre voulu à au moins un poste de préparation (PP), via au moins un convoyeur de sortie (CS), le système comprenant :

- une unité de stockage tampon (US) comprenant N niveaux d'entrée (VE$_1$ à VE$_N$) et au moins un niveau de recirculation (VR) superposés verticalement, ayant chacun une entrée unique et une sortie unique, et comprenant chacun un convoyeur de type « premier entré premier sorti » selon un premier sens pour les niveaux d'entrée et selon un deuxième sens opposé au premier sens pour le au moins un niveau de recirculation, avec N≥2, une charge présente sur le au moins un niveau de recirculation étant dite charge en recirculation ; et
- un élévateur d'entrée (EE) et un élévateur de sortie (ES), de type alternatif et discontinu, positionnés respectivement en regard des entrées et en regard des sorties des N niveaux d'entrée et du au moins un niveau de recirculation ;

**caractérisé en ce qu'**une unité de pilotage effectue un pilotage itératif de l'élévateur d'entrée comprenant à chaque itération les étapes suivantes :

- si l'élévateur d'entrée est affecté d'un statut d'attente recirculation, signifiant qu'il existe au moins une charge à recirculer dans le système (204), mise en attente (205) de l'élévateur d'entrée jusqu'à ce que ladite au moins une charge à recirculer ait été transférée sur l'entrée du au moins un niveau de recirculation ;
- si l'élévateur d'entrée n'est pas affecté dudit statut d'attente recirculation (204) :

  * détection (201) d'une première charge sur une sortie du convoyeur d'entrée et d'une deuxième charge sur la sortie du au moins un niveau de recirculation ;
  * sélection (206 à 211) d'une charge avec les règles suivantes : sélection (210) de la première charge si pas de deuxième charge présente, ou inversement (211) ; si les première et deuxième charges sont présentes, sélection (210, 211) soit systématiquement de la deuxième charge, soit de celle ayant le plus petit numéro d'ordre (209) ;
  * sélection (213) d'un niveau de destination parmi les niveaux d'entrée, en respectant une règle selon laquelle des charges présentes sur un même niveau d'entrée, hormis d'éventuelle(s) charge(s) à recirculer, sont séquencées dans un ordre croissant de numéros d'ordre ;
  * si la sélection d'un niveau de destination (213) aboutit, génération (219) pour l'élévateur d'entrée d'une mission de transfert de la charge sélectionnée sur l'entrée du niveau de destination sélectionné, sinon :

  - affectation à l'élévateur d'entrée dudit statut d'attente recirculation (216) ; et
  - sélection (218) d'un niveau à recirculer parmi les niveaux d'entrée, sans génération pour l'élévateur d'entrée d'une mission de transfert de la charge sélectionnée sur l'entrée du niveau à recirculer sélectionné, et affectation à chaque charge du niveau à recirculer d'un statut de charge à recirculer signifiant que ladite charge doit être transférée par l'élévateur de sortie sur l'entrée du au moins un niveau de recirculation.

2. Procédé selon la revendication 1, **caractérisé en ce que** l'étape de sélection (213) d'un niveau de destination comprend :

   - attribution d'une note à chacun des niveaux d'entrée, avec un jeu de règles de notation ; et
   - sélection du niveau d'entrée ayant la note la plus élevée ;

   et **en ce que** ledit jeu de règles de notation comprend, pour affecter une note à un niveau d'entrée donné :

   - initialisation de la note à zéro ;
   - si le niveau d'entrée donné est saturé, décrémentation de la note d'une valeur C0 ;
   - si le niveau d'entrée donné est vide, incrémentation de la note d'une valeur C1 ;
   - si le numéro d'ordre de la dernière charge entrée sur le niveau d'entrée donné est inférieur ou égal au numéro d'ordre de la charge sélectionnée, incrémentation de la note d'une valeur C2 ;

   avec : C1 < C2 < C0.

3. Procédé selon la revendication 2, **caractérisé en ce que** :

$$C2 = C3 - (NumCharge - NumDerCharge)$$

   avec NumDerCharge le numéro d'ordre de la dernière charge placée sur le niveau d'entrée donné et NumCharge le numéro d'ordre de la charge sélectionnée,
   et avec C1 < C3 < C0.

4. Procédé selon l'une quelconque des revendications 1 à 3, **caractérisé en ce que** si la sélection d'un niveau de destination (211) aboutit et si les conditions suivantes sont vérifiées :

- le niveau de destination sélectionné est vide ;
- le numéro d'ordre de la charge sélectionnée est strictement supérieur au numéro d'ordre de la charge en (N.Y)ème place dans une liste d'attendus en sortie, avec Y la capacité de charges de chaque niveau d'entrée ; et
- soit le au moins un niveau de recirculation est vide, soit la dernière charge placée sur le au moins un niveau de recirculation possède un numéro d'ordre inférieur au numéro d'ordre de la charge sélectionnée ;

alors le niveau de destination sélectionné prend le statut d'un niveau à recirculer et la charge sélectionnée prend le statut d'une charge à recirculer afin d'être transférée sur l'entrée du au moins un niveau de recirculation par l'élévateur de sortie.

5. Procédé selon l'une quelconque des revendications 1 à 4, l'unité de stockage tampon (US) comprenant en outre un niveau « voie rapide » (VQ), superposé verticalement avec les niveaux d'entrée ($VE_1$ à $VE_N$) et le au moins un niveau de recirculation (VR), ayant une entrée unique et une sortie unique, et comprenant un convoyeur de type « premier entré premier sorti » selon le premier sens, **caractérisé en ce que**, si une des conditions suivantes est respectée, l'étape de sélection (213) d'un niveau de destination comprend une sélection du niveau « voie rapide » :

- le numéro d'ordre de la charge sélectionnée est celui du prochain numéro d'ordre d'une liste d'attendus en sortie ; et
- le numéro d'ordre de la charge sélectionnée est celui directement attendu après le numéro d'ordre de la dernière charge placée dans le niveau « voie rapide ».

6. Procédé selon l'une quelconque des revendications 1 à 5, **caractérisé en ce que** l'étape de sélection (218) d'un niveau à recirculer comprend :

- pour chacun des niveaux d'entrée, identification du numéro d'ordre de la charge la plus proche de l'élévateur de sortie ; et
- sélection, comme niveau à recirculer, du niveau d'entrée pour lequel le numéro d'ordre identifié est le plus élevé.

7. Procédé selon l'une quelconque des revendications 1 à 6, **caractérisé en ce que**, si la sélection d'un niveau de destination (213) n'aboutit pas, le pilotage itératif de l'élévateur d'entrée comprend un test des deux conditions suivantes :

- le au moins un convoyeur de sortie (CS) est saturé (214) ; et
- un emplacement de prise par l'élévateur de sortie est occupé par une charge possédant le prochain numéro d'ordre d'une liste d'attendus en sortie (215) ;

et **en ce que** l'étape de sélection (218) d'un niveau à recirculer n'est pas effectuée si les deux conditions (214, 215) sont vérifiées, et est effectuée sinon.

8. Procédé selon l'une quelconque des revendications 1 à 7, **caractérisé en ce que**, si la sélection d'un niveau de destination (213) n'aboutit pas, le pilotage itératif de l'élévateur d'entrée comprend un test de la condition supplémentaire suivante :

- un nombre maximal prédéterminé de niveau(x) à recirculer est atteint (217) ;

et **en ce que** l'étape de sélection (218) d'un niveau à recirculer n'est pas effectuée si ladite condition supplémentaire (217) est vérifiée, et est effectuée sinon.

9. Procédé selon la revendication 8, **caractérisé en ce que** le nombre maximal prédéterminé de niveau(x) à recirculer est égal à un.

10. Produit programme d'ordinateur, comprenant des instructions de code de programme pour la mise en oeuvre du procédé selon au moins une des revendications 1 à 9, lorsque ledit programme est exécuté sur un ordinateur.

11. Médium de stockage lisible par ordinateur et non transitoire, stockant un produit programme d'ordinateur selon la revendication 10.

12. Unité de pilotage (UP) d'un système de stockage tampon et de séquencement de charges, configuré pour recevoir des charges non séquencées provenant d'au moins une unité externe, via au moins un convoyeur d'entrée (CE), et fournir au moins une séquence de charges dans un ordre voulu à au moins un poste de préparation (PP), via au moins un convoyeur de sortie (CS), le système comprenant :

- une unité de stockage tampon (US) comprenant N niveaux d'entrée ($VE_1$ à $VE_N$) et au moins un niveau de recirculation (VR) superposés verticalement, ayant chacun une entrée unique et une sortie unique, et comprenant chacun un convoyeur de type « premier entré premier sorti » selon un premier sens pour les niveaux d'entrée et selon un deuxième sens opposé au premier sens pour le au moins un niveau de recirculation, avec N≥2, une charge présente sur le au moins un niveau de recirculation étant dite charge en recirculation ; et

- un élévateur d'entrée (EE) et un élévateur de sortie (ES), de type alternatif et discontinu, positionnés respectivement en regard des entrées et en regard des sorties des N niveaux d'entrée et du au moins un niveau de recirculation ;

**caractérisé en ce que** ladite unité de pilotage (UP) est configurée pour effectuer un pilotage itératif de l'élévateur d'entrée selon le procédé de pilotage selon l'une quelconque des revendications 1 à 9.

## Patentansprüche

1. Verfahren zum Steuern eines Pufferlager- und Sequenzierungssystems von Lasten, das konfiguriert ist, um nichtsequenzierte Lasten, die von mindestens einer externen Einheit stammen, über mindestens einen Eingangsförderer (CE) zu empfangen und mindestens eine Sequenz von Lasten in einer gewünschten Reihenfolge mindestens einer Vorbereitungsstation (PP) über mindestens einen Ausgangsförderer (CS) bereitzustellen, wobei das System aufweist:

- eine Pufferlagereinheit (US), umfassend N Eingangsebenen ($VE_1$ bis $VE_N$) und mindestens eine Rückführebene (VR), die vertikal übereinander angeordnet sind, die jeweils einen einzigen Eingang und einen einzigen Ausgang aufweisen, und jeweils einen Förderer vom Typ "First In - First Out" in einer ersten Richtung für die Eingangsebenen und in einer zweiten Richtung, die entgegengesetzt zur ersten Richtung ist, für die mindestens eine Rückführebene aufweisen, wobei N≥2 ist, wobei eine Last, die auf der mindestens einen Rückführebene vorhanden ist, Rückführlast genannt wird, und
- einen Eingangsheber (EE) und einen Ausgangsheber (ES) vom alternierenden und diskontinuierlichen Typ, die jeweils gegenüber den Eingängen und gegenüber den Ausgängen der N Eingangsebenen und der mindestens einen Rückführebene angeordnet sind,

**dadurch gekennzeichnet, dass** eine Steuereinheit eine iterative Steuerung des Eingangshebers durchführt, die bei jeder Iteration die folgenden Schritte aufweist:

- wenn dem Eingangsheber ein Rückführungswartezustand zugewiesen wird, was bedeutet, dass mindestens eine Last vorhanden ist, die in dem System (204) zurückzuführen ist, in die Warteschlange Stellen (205) des Eingangshebers bis die mindestens eine zurückzuführende Last an den Eingang der mindestens einen Rückführebene transferiert worden ist,
- wenn dem Eingangsheber der Rückführungswartezustand (204) nicht zugewiesen wird,

* Erfassen (201) einer ersten Last an einem Ausgang des Eingangsförderers und einer zweiten Last am Ausgang der mindestens einen Rückführebene,
* Auswählen (206 bis 211) einer Last mit den folgenden Regeln: Auswählen (210) der ersten Last, wenn keine zweite Last vorhanden ist oder umgekehrt (211); wenn die erste und die zweite Last vorhanden sind, Auswählen (210, 211) entweder systematisch der zweiten Last oder derjenigen mit der kleinsten laufenden Nummer (209),
* Auswählen (213) einer Zielebene aus den Eingangsebenen unter Beachtung einer Regel, nach der Lasten, die auf derselben Eingangsebene vorhanden sind, abgesehen von einer etwaigen Last (von etwaigen Lasten), die zurückzuführen ist (sind), in einer aufsteigenden Reihenfolge von laufenden Nummern sequenziert werden,
* wenn das Auswählen einer Zielebene (213) erfolgreich ist, Generieren (219) für den Eingangsheber eines Auftrags zum Transferieren der ausgewählten Last an den Eingang der ausgewählten Zielebene, andernfalls:

- Zuordnen des Rückführungswartezustand (216) zum Eingangsheber und
- Auswählen (218) einer Rückführebene aus den Eingangsebenen ohne Generieren für den Eingangsheber eines Auftrags zum Transferieren der ausgewählten Last an den Eingang der ausgewählten Rückführebene und Zuordnen zu jeder Last der Rückführbene eines Zustands der zurückzuführenden Last, was bedeutet, dass die Last vom Ausgangsheber an den Eingang der mindestens einen Rückführebene transferiert werden muss.

2. Verfahren nach Anspruch 1, **dadurch gekennzeichnet, dass** der Schritt des Auswählens (213) einer Zielebene aufweist:

- Vergeben von einer Note an jede der Eingangsebenen mit einem Satz von Benotungsregeln und
- Auswählen der Eingangsebene mit der höchsten Note,
und dadurch, dass der Satz von Benotungsregeln zum Zuweisen einer Note an eine bestimmte Eingangsebene aufweist:

- Initialisieren der Note bei Null,
- wenn die bestimmte Eingangsebene gesättigt ist, Dekrementieren der Note um einen Wert C0,
- wenn die bestimmte Eingangsebene leer ist, Inkrementieren der Note um einen Wert C1,
- wenn die laufende Nummer der letzten Last auf der bestimmten Eingangsebene kleiner als oder gleich der laufenden Nummer der ausgewählten Last ist, Inkrementieren der Note um einen Wert C2,

mit: C1<C2<C0.

3. Verfahren nach Anspruch 2, **dadurch gekennzeichnet, dass**:

$$C2 = C3 - (NumCharge - NumDerCharge)$$

wobei NumDerCharge die laufende Nummer der letzten Last ist, die auf der bestimmten Eingangsebene platziert ist, und NumCharge die laufende Nummer der ausgewählten Last ist C1, mit C1 < C3 < C0.

4. Verfahren nach einem der Ansprüche 1 bis 3, **dadurch gekennzeichnet, dass**, wenn das Auswählen einer Zielebene (211) erfolgreich ist und wenn die folgenden Bedingungen erfüllt werden:

- die ausgewählte Zielebene ist leer,
- die laufende Nummer der ausgewählten Last ist strikt größer als die laufende Nummer der Last an (N.Y)$^{-ter}$ Stelle in einer Ausgangswarteliste, wobei Y die Lastenkapazität jeder Eingangsebene ist, und
- entweder die mindestens eine Rückführebene ist leer oder die letzte Last, die auf die mindestens eine Rückführebene platziert ist, besitzt eine laufende Nummer, die kleiner als die laufende Nummer der ausgewählten Last ist,

dann nimmt die ausgewählte Zielebene den Zustand einer Rückführebene an und die ausgewählte Last nimmt den Zustand einer zurückzuführenden Last an, um vom Ausgangsheber an den Eingang der mindestens einen Rückführebene transferiert zu werden.

5. Verfahren nach einem der Ansprüche 1 bis 4, wobei die Pufferlagereinheit (US) ferner eine Ebene "schneller Weg" (VQ), die vertikal über den Eingangsebenen (VE1 bis V) und der mindestens einen Rückführebene (VR) angeordnet ist, mit einem einzigen Eingang und einem einzigen Ausgang aufweist und einen Förderer vom Typ "First In - First Out" in der ersten Richtung aufweist, **dadurch gekennzeichnet, dass**, wenn eine der folgenden Bedingungen erfüllt ist, der Schritt des Auswählens (213) einer Zielebene ein Auswählen der Ebene "schneller Weg" aufweist:

- die laufende Nummer der ausgewählten Last ist jene der nächsten laufenden Nummer einer Ausgangswarteliste und
- die laufende Nummer der ausgewählten Last ist jene, die direkt nach der laufenden Nummer der letzten Last erwartet wird, die auf der Ebene "schneller Weg" platziert wird.

6. Verfahren nach einem der Ansprüche 1 bis 5, **dadurch gekennzeichnet, dass** der Schritt des Auswählens (218) einer Rückführebene aufweist:

- für jede der Eingangsebenen Identifizieren der laufenden Nummer der Last, die dem Ausgangsheber am nächsten ist, und
- Auswählen der Eingangsebene, für die die identifizierte laufende Nummer die höchste ist, als Rückführebene.

7. Verfahren nach einem der Ansprüche 1 bis 6, **dadurch gekennzeichnet, dass**, wenn das Auswählen einer Zielebene (213) nicht erfolgreich ist, die iterative Steuerung des Eingangshebers einen Test der folgenden zwei Bedingungen aufweist:

- der mindestens eine Ausgangsförderer (CS) ist gesättigt (214) und
- eine Aufnahmestelle durch den Ausgangsheber wird von einer Last besetzt, die die nächste laufende Nummer einer Ausgangswarteliste (215) besitzt,

und dadurch, dass der Schritt des Auswählens (218) einer Rückführebene nicht durchgeführt wird, wenn die zwei Bedingungen (214, 215) erfüllt werden und ansonsten durchgeführt wird.

8. Verfahren nach einem der Ansprüche 1 bis 7, **dadurch gekennzeichnet, dass**, wenn das Auswählen einer Zielebene (213) nicht erfolgreich ist, die iterative Steuerung des Eingangshebers einen Test der folgenden zusätzlichen Bedingung aufweist:

- eine vorbestimmte maximale Anzahl an Rückführebenen wird erreicht (217),

und dadurch, dass der Schritt des Auswählens (218) einer Rückführebene nicht durchgeführt wird, wenn die zusätzliche Bedingung (217) erfüllt wird und ansonsten durchgeführt wird.

9. Verfahren nach Anspruch 8, **dadurch gekennzeichnet, dass** die vorbestimmte maximale Anzahl an Rückführebenen gleich eins ist.

10. Computerprogrammprodukt, das Programmcodeanweisungen für das Umsetzen des Verfahrens nach mindestens einem der Ansprüche 1 bis 9 aufweist, wenn das Programm auf einem Computer ausgeführt wird.

11. Computerlesbares und nicht-transitorisches Aufzeichnungsmedium, das ein Computerprogrammprodukt nach Anspruch 10 speichert.

12. Einheit zum Steuern (UP) eines Pufferlager- und Sequenzierungssystems von Lasten, das konfiguriert ist, um nichtsequenzierte Lasten, die von mindestens einer externen Einheit stammen, über mindestens einen Eingangsförderer (CE) zu empfangen und mindestens eine Sequenz von Lasten in einer gewünschten Reihenfolge mindestens einer Vorbereitungsstation (PP) über mindestens einen Ausgangsförderer (CS) bereitzustellen, wobei das System aufweist:

    - eine Pufferlagereinheit (US), umfassend N Eingangsebenen ($VE_1$ bis $VE_N$) und mindestens eine Rückführebene (VR), die vertikal übereinander angeordnet sind, die jeweils einen einzigen Eingang und einen einzigen Ausgang aufweisen, und jeweils einen Förderer vom Typ "First In - First Out" in einer ersten Richtung für die Eingangsebenen und in einer zweiten Richtung, die entgegengesetzt zur ersten Richtung ist, für die mindestens eine Rückführebene aufweisen, wobei N≥2 ist, wobei eine Last, die auf der mindestens einen Rückführebene vorhanden ist, Rückführlast genannt wird, und
    - einen Eingangsheber (EE) und einen Ausgangsheber (ES) vom alternierenden und diskontinuierlichen Typ, die jeweils gegenüber den Eingängen und gegenüber den Ausgängen der N Eingangsebenen und der mindestens einen Rückführebene angeordnet sind,

**dadurch gekennzeichnet, dass** die Steuereinheit (UP) konfiguriert ist, um eine iterative Steuerung des Eingangshebers nach dem Verfahren nach einem der Ansprüche 1 bis 9 durchzuführen.

## Claims

1. A method for controlling a buffer storage and load sequencing system, configured to receive non-sequenced loads originating from at least one external unit, via at least one input conveyor (CE), and supply at least one sequence of loads in a desired order to at least one preparation station (PP), via at least one output conveyor (CS), the system comprising:

    - a buffer storage unit (US) comprising N input levels ($VE_1$ to $VE_N$) and at least one recirculation level (VR) superimposed vertically, each having a unique input and a unique output, and each comprising a "first in, first out" type conveyor according to a first direction for the input levels and according to a second direction opposite to the first direction for the at least one recirculation level, with N≥2, a load present on the at least one recirculation level being called recirculating load; and
    - an input elevator (EE) and an output elevator (ES), of the alternating and discontinuous type, positioned respectively opposite the inputs and opposite the outputs of the N input levels and of the at least one recirculation level;

**characterised in that** a drive unit performs an iterative control of the input elevator comprising at each iteration the following steps:

    - if a recirculation waiting status is assigned to the input elevator, meaning that there is at least one load to be recirculated in the system (204), setting the input elevator on hold (205) until said at least one load to be recirculated has been transferred on the input of the at least one recirculation level;
    - if said recirculation waiting status is not assigned to the input elevator (204):

        * detecting (201) a first load on an output of the input conveyor and a second load on the output of at least one recirculation level;
        * selecting (206 to 211) a load with the following rules: selecting (210) the first load if no second load present, or vice versa (211); if the first and second loads are present, selecting (210, 211) either systematically the second load, or of that one having the lowest sequence number (209);
        * selecting (213) a destination level from among the input levels, while complying with a rule according to which loads present on the same input level, apart from any possible load(s) to be recirculated, are sequenced in ascending sequence number order;
        * if the selection of a destination level (213) is successful, generating (219) for the input elevator a mission for transferring the selected load on the input of the selected destination level, otherwise:

- assigning said recirculation waiting status to the input elevator (216); and
- selecting (218) a level to be recirculated from among the input levels, without generation for the input elevator of a mission for transferring the selected load on the input of the selected level to be recirculated, and assigning a status of load to be recirculated to each load of the level to be recirculated meaning that said load should be transferred by the output elevator on the input of at least one recirculation level.

2. The method according to claim 1, **characterised in that** the step of selecting (213) a destination level comprises:

   - assigning a score to each of the input levels, with a set of scoring rules; and
   - selecting the input level with the highest score; and **in that** said set of scoring rules comprises, for assigning a score to a given input level:

      - resetting the score to zero;
      - if the given input level is saturated, decrementing the note by a value C0;
      - if the given input level is empty, incrementing the note by a value C1;
      - if the sequence number of the last load input on the given input level is lower than or equal to the sequence number of the selected load, incrementing the score by a value C2;

   with: C1 < C2 < C0.

3. The method according to claim 2, **characterised in that**:

$$C2 = C3 - (NumCharge - NumDerCharge)$$

   with NumDerCharge the sequence number of the last load placed on the given input level and NumCharge the sequence number of the selected load,
   and with C1 < C3 < C0.

4. The method according to any one of claims 1 to 3, **characterised in that** if the selection of a destination level (211) is successful and if the following conditions are met:

   - the selected destination level is empty;
   - the sequence number of the selected load is strictly higher than the sequence number of the load in the $(N.Y)^{th}$ place in a list of expected outputs, with Y the load capacity of each input level; and
   - either the at least one recirculation level is empty, or the last load placed on the at least one recirculation level has a sequence number lower than the sequence number of the selected load;

   then the selected destination level takes on the status of a level to be recirculated and the selected load takes on the status of a load to be recirculated in order to be transferred to the input of the at least one recirculation level by the output elevator.

5. The method according to any one of claims 1 to 4, the buffer storage unit (US) further comprising a "fast track" level (VQ), vertically superimposed with the input levels ($VE_1$ to $VE_N$) and the at least one recirculation level (VR), having a unique input and a unique output, and comprising a "first in, first out" type conveyor according to the first direction, **characterised in that**, if one of the following conditions is met, the step of selecting (213) a destination level comprises selecting the "fast track" level:

   - the sequence number of the selected load is that of the next sequence number of a list of expected outputs; and
   - the sequence number of the selected load is that one directly expected after the sequence number of the last load placed in the "fast track" level.

6. The method according to any one of claims 1 to 5, **characterised in that** the step of selecting (218) a level to be recirculated comprises:

   - for each of the input levels, identifying the sequence number of the load the closest to the output elevator; and
   - selecting, as the level to be recirculated, the input level for which the identified sequence number is the highest.

7. The method according to any one of claims 1 to 6, **characterised in that**, if the selection of a destination level (213) is not successful, the iterative control of the input elevator comprises a test of the following two conditions:

   - the at least one output conveyor (CS) is saturated (214); and
   - a position for picking by the output elevator is occupied by a load having the next sequence number of a list of expected outputs (215);

and **in that** the step of selecting (218) a level to be recirculated is not performed if the two conditions (214, 215) are met, and is performed otherwise.

8. The method according to any one of claims 1 to 7, **characterised in that**, if the selection of a destination level (213) is not successful, the iterative control of the input elevator comprises a test of the following additional condition:

   - a predetermined maximum number of level(s) to be recirculated is reached (217);

   and **in that** the step of selecting (218) a level to be recirculated is not performed if said additional condition (217) is met, and is performed otherwise.

9. The method according to claim 8, **characterised in that** the predetermined maximum number of level(s) to be recirculated is equal to one.

10. A computer program product, comprising program code instructions for implementing the method according to at least one of claims 1 to 9, when said program is executed on a computer.

11. A computer-readable, non-transitory storage medium, storing a computer program product according to claim 10.

12. A drive unit (UP) of a buffer storage and load sequencing system, configured to receive non-sequenced loads originating from at least one external unit, via at least one input conveyor (CE), and supply at least one sequence of loads in a desired order to at least one preparation station (PP), via at least one output conveyor (CS), the system comprising:

   - a buffer storage unit (US) comprising N input levels ($VE_1$ to $VE_N$) and at least one recirculation level (VR) superimposed vertically, each having a unique input and a unique output, and each comprising a "first in, first out" type conveyor according to a first direction for the input levels and according to a second direction opposite to the first direction for the at least one recirculation level, with N≥2, a load present on the at least one recirculation level being called recirculating load; and
   - an input elevator (EE) and an output elevator (ES), of the alternating and discontinuous type, positioned respectively opposite the inputs and opposite the outputs of the N input levels and of at least one recirculation level;

   **characterised in that** said drive unit (UP) is configured to perform an iterative control of the input elevator according to the control method according to any one of claims 1 to 9.

EP 3 648 026 B1

VE$_N$  VQ  24  VR

UP

21

22

C12'

C21'  C13'

C22'  C14'  C11'

C21  C12  C22  C13  C14  C11

C21"  C14"  C13"  C12"  C11"

CE

VE$_1$

VE$_2$

VE$_3$

23

US

EE

ES

CS

PP

Fig. 1

201 — Identification des charges en entrée et recirculation

202 — N° d'ordre ok ? — Non OK → 203 Charge en rebut

OK

204 — Elévateur en attente recirculation ? — OUI → 205 Attente au niveau du conv d'entrée

NON

206 — Charge à prendre en recirculation ? — OUI → 208 Charge sur le conv d'entrée ? — NON

NON

OUI

208 → OUI → 209 N° d'ordre charge recirculation < N° d'ordre charge entrée ? — OUI → 211 Sélection de la charge en recirculation

212 Attente au niveau du conv d'entrée

207 — Charge sur le conv d'entrée ? — NON → 212

NON — 209

210 — Sélection de la charge sur le conv d'entrée

213 — Sélection du meilleur niveau de destination

Pas de résultat | Niveau trouvé

214 — Conv sortie saturé ? — OUI → 215 N° attendu sur emplacements de prise ? — OUI

Niveau trouvé → 219 Missions de prise / dépose au niveau sélectionné

NON

NON

216 — Elévateur d'entrée en attente recirculation

217 — Nbe max de niv à recirculer atteint ? — NON → 218 Choix du niveau à recirculer

OUI

Fig. 2

301

Identification des
charges sur les
emplacements
de prise

302

NON

Prochain
n° attendu dispo
pour prise
?

OUI

309

NON

Charge
à recirculer
dispo pour
prise ?

OUI

303

Conv
sortie
saturé
?

OUI

NON

308

304

Sélection charge
du prochain n°
attendu en sortie

Liste des
attendus
en sortie

310

Sélection charge
"à recirculer"

311

Mission de prise
de la charge

312

Mission de dépose
sur le niveau
de recirculation

313

Mise à jour
des statuts

305

Mission de prise
de la charge

306

Mission de dépose
sur le convoyeur
de sortie

307

Mise à jour de la
liste des attendus
en sortie

Fig. 3

44    UP                41              45

CPU

420   42    43

ROM    RAM

Fig. 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3051948 A1